# EUROPEAN PATENT APPLICATION

(11) **EP 4 851 755 A1**
(43) Date of publication of application: **09.12.2026**
(21) Application number: 26181954.4
(22) Date of filing: 29.05.2026
(51) Int. Cl.: G06F 3/01, G06F 3/033, G06F 3/0482

(54) **CONTROLLER-BASED HUD INVOCATION**

(30) Priority: 06.06.2025 US 202563819362 P
(71) Applicant: Apple Inc., Cupertino, CA 95014 (US)
(72) Inventor: STEVO, Katherine, Sunnyvale (US); BREWER, Daniel J., Redwood City (US)
(74) Representative: COPA Copenhagen Patents

(57) **Abstract**

A technique for determining the orientation and pose of a controller relative to the head of a user, and invoking the presentation of a user interface component, is described. The technique includes determining controller orientation data from image data, determining the pose of the controller relative to the user's head, and determining a gaze vector for the user. The user interface component is invoked based on a comparison of a directional vector from the controller and the location of the user's head. Additionally, the method involves determining a geometry in space based on the controller's location, and satisfying a gaze criterion when the gaze vector intersects the geometry. The user interface component is selected from a plurality of user interface elements based on the controller's pose satisfying specific input states, which are associated with geometric characteristics between portions of the controller and the user's head.

## Description

### Background

Some devices can generate and present Extended Reality (XR) Environments. An XR environment may include a wholly or partially simulated environment that people sense and/or interact with via an electronic system. In XR, a subset of a person's physical motions, or representations thereof, is tracked, and in response, one or more characteristics of one or more virtual objects simulated in the XR environment are adjusted in a manner that comports with realistic properties. In some embodiments, a user may use controllers to interact with the virtual content. For example, users may use gestures to select content, initiate activities, or the like. However, what is needed is a technique to improve the usability of controllers.

### Brief Description of the Drawings

FIGs. 1A-1B show example diagrams of a user using a controller to invoke a first user interface (UI) component, in accordance with one or more embodiments.
FIGs. 2A-2B show example diagrams of a user using a controller to invoke a second user interface (UI) component, in accordance with some embodiments.
FIG. 3 shows a flowchart of a technique for using a controller pose to invoke user input components, in accordance with some embodiments.
FIG. 4 shows a flowchart of a technique for determining controller state parameters, in accordance with some embodiments.
FIG. 5 shows a hand orientation state machine for determining a controller pose, in accordance with one or more embodiments.
FIGs. 6A-6B show flowcharts of a technique for processing a detected controller pose for input, in accordance with one or more embodiments.
FIG. 7 shows a system diagram of an electronic device which can be used for gesture input, in accordance with one or more embodiments.
FIG. 8 shows an exemplary system for use in various extended reality technologies.

### Detailed Description

This disclosure pertains to systems, methods, and computer readable media to enable pose-based controller input to invoke a user interface (UI) component. In some enhanced reality contexts, certain controller poses may be used as user input poses. For example, detection of a controller being held such that the user's hand is in a palm-up position hand pose may trigger a particular user input action, or such as invoking a particular UI component. As another example, detection of a controller being held such that the user's hand is in a palm-down position hand pose may trigger a particular user input action, or such as invoking a different UI component. For example, a user may initiate presentation of an icon or other virtual content by holding their controller in a palm-up position. From this position, a user can flip their hand to activate additional or alternative virtual content by flipping their controller to a palm-down position.

According to one or more embodiments, determining whether a controller is in an input pose includes tracking not only the controller pose, but additional pose information for the user, such as a head position. In some embodiments, the location information may be determined based on sensor data from sensors capturing the various joints. Additionally, or alternatively, location information for the various joints may be inferred or otherwise derived from sensor data or a wearable device, such as a head-mounted device. For example, a head position may be determined based on an offset distance and/or orientation from a headset position, or may use the headset position as the head position and/or orientation, in accordance with one or more embodiments. The pose of the controller may be compared against the head position information, to determine whether the relative position of the head and the controller satisfies criteria for any of one or more controller pose-based input actions.

In some embodiments, a controller may be determined to be in a palm-up position if a particular surface or portion of the controller is mostly facing toward the head. This may be determined, for example, from camera data captured by a head-worn device or otherwise from the perspective of a user toward the user's controller, and/or motion information from the controller. If the surface or portion of the controller is determined to be sufficiently facing the head of the user, then the pose of the controller is classified as a palm-up input pose. Once the palm-up pose is detected, a first UI element can be invoked in a particular location relative to the controller without needing additional user selection, such as a button press. Similarly, a controller may be determined to be in a palm-flip pose if, from the palm-up position, the surface or portion of the controller is determined to be sufficiently facing away from the head of the user. Once the palm-flip pose is detected, a second UI element can be invoked in a particular location relative to the controller without needing additional user selection.

A hand gesture state may be determined by refining the hand pose determination based on gaze. For example, a hand may be determined to be in a palm-up gesture or a palm-flip gesture if a gaze vector is determined to satisfy a gaze criterion. The gaze criterion may be satisfied, for example, if a gaze location is within a threshold distance of a virtual object, or within a threshold distance of the controller. In some embodiments, the gaze criterion may be satisfied if the gaze location is within a bounding box or other predefined geometry around a controller location based on controller tracking data.

Embodiments described herein improve upon input gesture detection techniques by considering the pose of the controller along with gaze to further infer whether a detected controller pose is intentional, thereby improving the usefulness and accuracy of controller pose-based input systems.

In the following disclosure, a physical environment refers to a physical world that people can sense and/or interact with without aid of electronic devices. The physical environment may include physical features such as a physical surface or a physical object. For example, the physical environment corresponds to a physical park that includes physical trees, physical buildings, and physical people. People can directly sense and/or interact with the physical environment such as through sight, touch, hearing, taste, and smell. In contrast, an XR environment refers to a wholly or partially simulated environment that people sense and/or interact with via an electronic device. For example, the XR environment may include Augmented Reality (AR) content, Mixed Reality (MR) content, Virtual Reality (VR) content, and/or the like. With an XR system, a subset of a person's physical motions, or representations, is tracked, and in response, one or more characteristics of one or more virtual objects simulated in the XR environment are adjusted in a manner that comports with at least one law of physics. As one example, the XR system may detect head movement and, in response, adjust graphical content and an acoustic field presented to the person in a manner similar to how such views and sounds would change in a physical environment. As another example, the XR system may detect movement of the electronic device presenting the XR environment (e.g., a mobile phone, a tablet, a laptop, or the like) and adjust graphical content and an acoustic field presented to the person in a manner similar to how such views and sounds would change in a physical environment. In some situations (e.g., for accessibility reasons), the XR system may adjust characteristic(s) of graphical content in the XR environment in response to representations of physical motions (e.g., vocal commands).

There are many different types of electronic systems that enable a person to sense and/or interact with various XR environments. Examples include: head-mountable systems, projection-based systems, heads-up displays (HUD), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head-mountable system may have one or more speaker(s) and an integrated opaque display. Alternatively, a head-mountable system may be configured to accept an external opaque display (e.g., a smartphone). The head-mountable system may incorporate one or more imaging sensors to capture images or video of the physical environment, and/or one or more microphones to capture audio of the physical environment. Rather than an opaque display, a head-mountable system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

In the following description, for purposes of explanation, numerous specific details are set forth in order to provide a thorough understanding of the disclosed concepts. As part of this description, some of this disclosure's drawings represent structures and devices in block diagram form in order to avoid obscuring the novel aspects of the disclosed concepts. In the interest of clarity, not all features of an actual implementation may be described. Further, as part of this description, some of this disclosure's drawings may be provided in the form of flowcharts. The boxes in any particular flowchart may be presented in a particular order. It should be understood, however, that the particular sequence of any given flowchart is used only to exemplify one embodiment. In other embodiments, any of the various elements depicted in the flowchart may be deleted, or the illustrated sequence of operations may be performed in a different order, or even concurrently. In addition, other embodiments may include additional steps not depicted as part of the flowchart. Moreover, the language used in this disclosure has been principally selected for readability and instructional purposes and may not have been selected to delineate or circumscribe the inventive subject matter, or resort to the claims being necessary to determine such inventive subject matter. Reference in this disclosure to "one embodiment" or to "an embodiment" means that a particular feature, structure, or characteristic described in connection with the embodiment is included in at least one embodiment of the disclosed subject matter, and multiple references to "one embodiment" or "an embodiment" should not be understood as necessarily all referring to the same embodiment.

It will be appreciated that in the development of any actual implementation (as in any software and/or hardware development project), numerous decisions must be made to achieve a developer's specific goals (e.g., compliance with system- and business-related constraints) and that these goals may vary from one implementation to another. It will also be appreciated that such development efforts might be complex and time-consuming but would nevertheless be a routine undertaking for those of ordinary skill in the design and implementation of graphics modeling systems having the benefit of this disclosure.

### Example Controller Poses

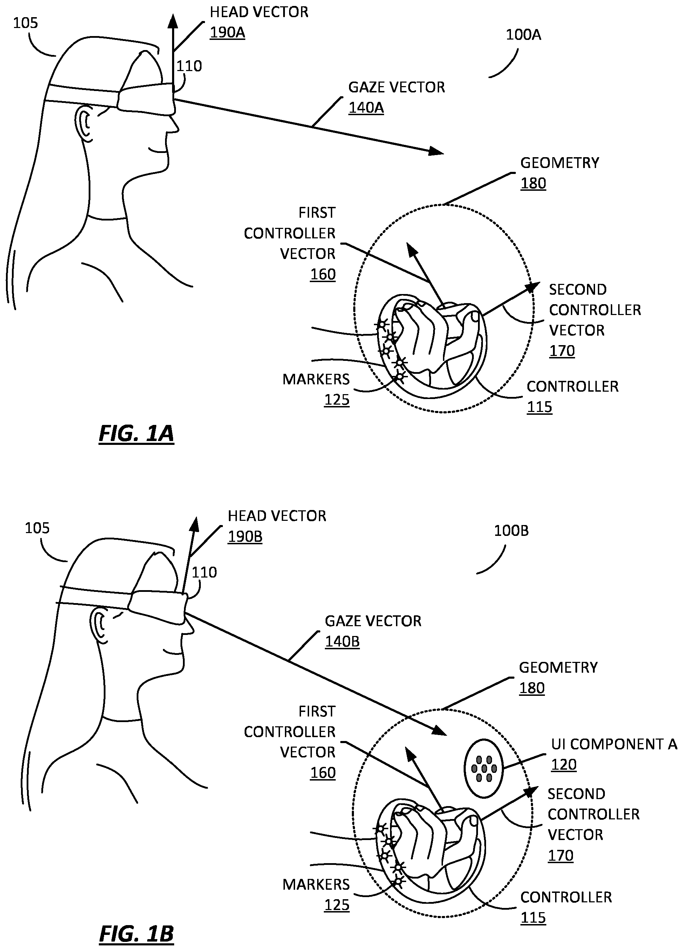

FIGs. 1A-1B show example diagrams of a user performing a first controller input pose, in accordance with one or more embodiments. In particular, FIG. 1A shows a user 105 using an electronic device 110 within an environment. In FIG. 1A, the user 105 is positioned within a physical or mixed-reality environment 100A and is wearing, holding, or otherwise associated with an electronic device 110, such as a head-mounted device, wearable device, or other mobile device configured to provide an XR experience.

According to some embodiments, electronic device 110 may include a pass-through or see-through display such that components of the physical environment are visible. In some embodiments, electronic device 110 may include one or more sensors configured to track the user to determine whether a pose of the user should be processed as user input. For example, electronic device 110 may include outward-facing sensors such as cameras, depth sensors, and the like which may capture one or more portions of the user, such as hands, arms, shoulders, and the like. The sensors may also be configured to capture pose information of a handheld controller 115. For example, the sensors may determine positional information for the controller 115 by detecting markers 125 configured in a predefined constellation understood by the electronic device 110 to determine the pose of the controller 115 based on the configuration of the markers 125 in image data.

According to one or more embodiments, the controller 115 may be associated with multiple input poses, such as poses which, when performed, may indicate that an input action should be performed. In the example shown, user 105 is holding the controller 115 in a manner such that their hand is in a palm-up position. In some embodiments, the controller 115 may be determined to be a palm-up input pose based on a relative position of the controller to the head of the user 105. For example, if a first side of the controller 115 faces the head more than it is facing away from the head, the controller 115 may be determined to be in a palm-up position. The first side of the controller may be determined to be a side that is parallel to a palm of the user when held by the user. In some embodiments, this may be determined by comparing a first controller vector 160 originating from a first side of the controller, with a head vector 190A. In some embodiments, the comparison of the head vector 190A to the first controller vector 160 may be further compared against a relationship between the head vector 190A and a second controller vector 170, originating from a second side of the controller 115. According to some embodiments, the second side of the controller may be a side that is perpendicular to a palm of the user when the user is holding the controller.

According to one or more embodiments, the electronic device 110 may include inward-facing sensors, such as eye tracking cameras, which may be used in conjunction with the outward-facing sensors to determine whether an input pose is performed. For example, as shown, the gaze vector 140A is targeted outside a geometry 180 around the controller 115. Accordingly, in some embodiments, the controller pose may be determined to be an unintentional input pose because the user is looking away from the controller. Thus, in some embodiments, the input pose of the controller will be disregarded.

By contrast, turning to FIG. 1B, if the gaze vector 140B intersects the geometry 180 while the controller pose is positioned so that the first controller vector 160 is facing the user's head, then the controller pose may be determined to be an intentional input pose. In this case, the user input action may be triggered. For purposes of the example, the palm-up position of the controller 115 may be associated with a user input action to cause user interface (UI) component A 120 to be presented. According to one or more embodiments, UI component A 120 may be virtual content which is not actually present in mixed-reality environment 100B, but is presented by electronic device 110 in an extended reality context such that UI component A 120 appears within physical environment from the perspective of user 105 using the electronic device 110. Virtual content may include, for example, graphical content, image data, or other content for presentation to a user.

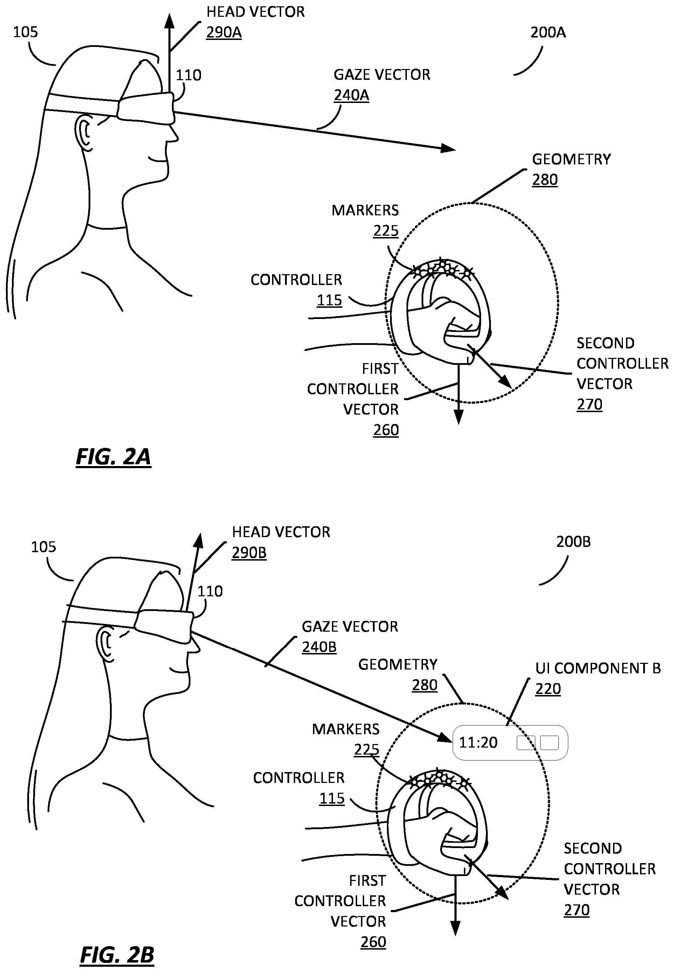

FIGs. 2A-2B present alternate diagrams of a user performing a second controller input pose, in accordance with one or more embodiments. In particular, in FIG. 2A, user 105 has changed the position of the controller 115, such that the controller is now in a position consistent with the user's palm facing down.

According to some embodiments, determination that the controller is in a palm-down position may be associated with a user input action that differs from the palm-up pose shown in FIGs. 1A-1B. Further, detection of a palm-down position may be indicative of a palm-flip gesture. For example, when a user is in a palm-up input gesture position, as shown at FIG. 1A-1B, and the user flips their hand so the palm is in a palm-down position as shown in FIG. 2A-2B, the controller may be associated with the particular user input action and in response, the device may generate virtual content.

In some embodiments, the controller 115 may be determined to be a palm-down input pose based on a relative position of the controller to the head of the user 105. For example, if a first side of the controller 115 faces away from the head more than it is facing toward the head, the controller 115 may be determined to be in a palm-down position. In some embodiments, this may be determined by comparing a first controller vector 260 originating from a first side of the controller, with a head vector 290A. For example, if an angular difference between the first controller vector 260 and the head vector 290A are substantially opposite, such as within a predefined range of a 180 degree difference between the vectors, or based on a dot product value of the vectors falls within a threshold, the controller 115 is determined to be in a palm-down position. In some embodiments, the comparison of the head vector 290A to the first controller vector 260 may be further compared against a relationship between the head vector 290A and a second controller vector 270, originating from a second side of the controller 115. For example, if an angular difference between the first controller vector 260 and the head vector 290A are substantially opposite, and the hand is determined to be over-rotated based on the second controller vector 270, the controller 115 is determined to be in a palm-down position. According to some embodiments, the second side of the controller may be a side that is perpendicular to a palm of the user when the user is holding the controller.

In the example shown, the gaze vector 240A is targeted outside a geometry 280 around the controller 115. Accordingly, in some embodiments, the controller pose may be determined to be an unintentional input pose because the user is looking away from the controller. Thus, in some embodiments, the input pose of the controller will be disregarded.

By contrast, turning to FIG. 2B, if the gaze vector 240B intersects the geometry 280 while the controller pose is positioned so that the first controller vector 260 is facing away from the user's head, then the controller pose may be determined to be an intentional input pose. In this case, the user input action may be triggered. For purposes of the example, the palm-flip position of the controller 115 may be associated with a user input action to cause user interface (UI) component B 220 to be presented.

### User Interface Gesture Invocation Overview

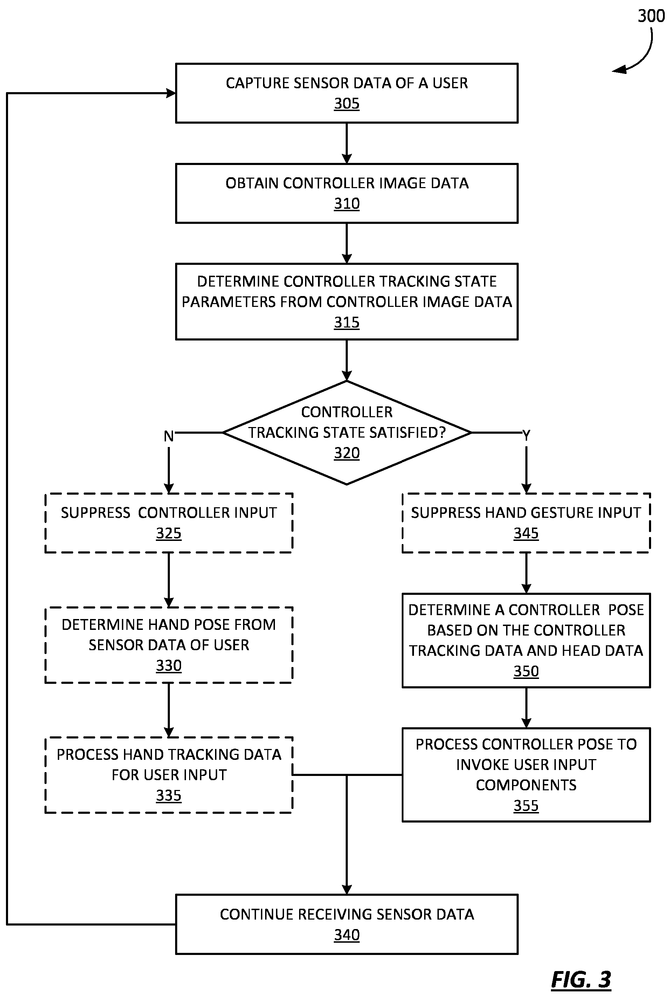

According to some embodiments, a user may invoke user interface components by holding a controller in one or more predefined poses. In an XR environment, a user may use predefined hand gestures to invoke presentation of predefined UI components. Here, the system allows a user to similarly invoke UI components by holding the controller in a similar manner. FIG. 3 shows a flowchart of a technique for using a controller pose to invoke user input components, in accordance with some embodiments. For purposes of explanation, the following steps will be described as being performed by particular components. However, it should be understood that the various actions may be performed by alternate components. The various actions may be performed in a different order. Further, some actions may be performed simultaneously, and some may not be required, or others may be added.

The flowchart 300 begins at block 305, where sensor data is captured of a user. The sensor data may include, for example, image data from one or more inward-facing and/or outward-facing cameras of a head-mounted device. For example, outward-facing image data may be captured to determine one or more joints of the user, such as hand position, joint information, or the like. As another example, inward-facing cameras may capture gaze information for a user, from which a direction the user is viewing may be interpreted. Other sensor data may include positional information, such as positional information for a head-mounted device, which may be used to determine the head position of the user.

The flowchart 300 also includes, at block 310, capturing controller image data. Controller image data may be captured by one or more cameras on a head-mounted device or other wearable device. As another example, the controller image data may be captured from one or more additional cameras in the environment. Controller image data may include image data in which a controller is visible, or in which a controller is expected to be visible. For example, when the controller is visible, i.e., the constellation of IR markers may be visible, or at least a predefined portion of the controller may be visible in an RGB image. As another example, the controller may not be visible, if at least a predefined portion of the controller and/or the IR emitters are not visible in the controller image data.

The flowchart 300 proceeds to block 315, where controller tracking state parameters are determined from the controller image data. The controller tracking state parameters may include one or more measurements of the controller, state information from the controller, or the like, which may be used to determine whether the controller should be tracked for invoking user input. As will be described in greater detail below, examples of controller tracking state parameters may include whether the controller is being held by a user, whether the controller is sufficiently visible, or the like.

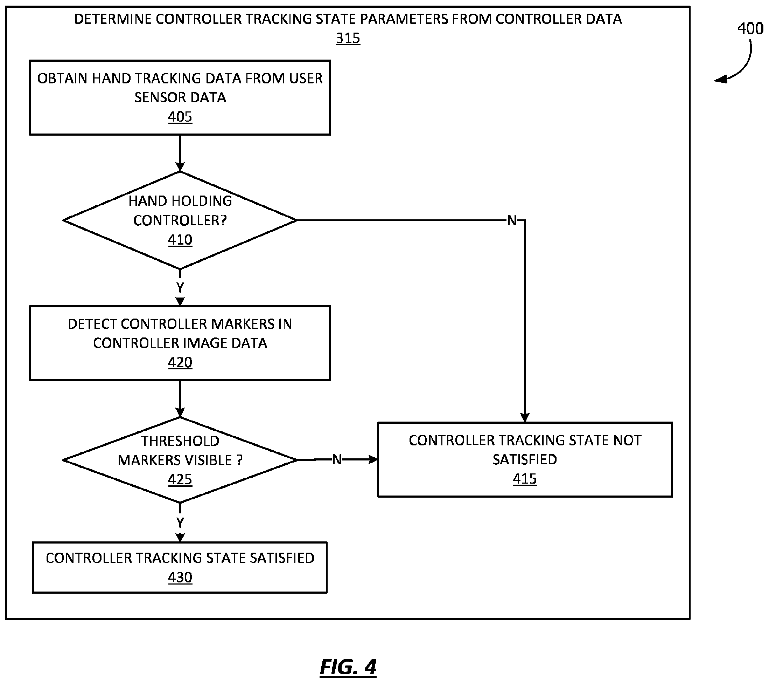

FIG. 4 shows an example technique for determining controller tracking state parameters, in accordance with one or more embodiments. In particular, FIG. 4 shows an example flowchart of a technique for determining whether the controller should be tracked for pose based invocation of user interface components, as described above with respect to block 315 of FIG. 3. For purposes of explanation, the following steps will be described as being performed by particular components. However, it should be understood that the various actions may be performed by alternate components. The various actions may be performed in a different order. Further, some actions may be performed simultaneously, and some may not be required, or others may be added.

The flowchart 400 begins at block 405, where hand tracking data is obtained from the user sensor data. The hand tracking data may include, for example, image data, depth data, and the like, from which pose, position, and/or motion can be estimated. For example, location information for one or more joints of a hand can be determined from the tracking data, and used to estimate a pose of the hand. The pose, position, and/or motion may be determined from a hand tracking pipeline, which may provide additional signals, such as whether the hand is occupied, such as when the hand is holding the controller.

The flowchart 400 proceeds to block 410, where determination is made as to whether the hand is holding the controller. As described above, the hand tracking data may include a signal indicating whether the hand is holding the controller. Alternatively, other data may be used to determine whether the hand is holding the controller. For example, image data of the controller may be analyzed to determine whether a hand is holding the controller. For example, the image data may be applied to an object detection model, which may be trained to detect whether a user of the electronic device is holding the controller in the image data. If a determination is made at block 410 that the hand is not holding the controller, then the flowchart concludes at block 415, and the controller tracking state is determined to not be satisfied. Returning to FIG. 3, the determination that the controller tracking state is not satisfied may be used at decision block 320.

Returning to FIG. 4, if a determination is made that the hand is holding the controller at block 410, then the flowchart 400 proceeds to block 420. At block 420, controller markers are detected in the controller image data. Controller markers may include a set of illuminators, reflectors, or other markers which, when detected in image data, can be used to determine a position and/or orientation of the controller. For example, controller markers may be incorporated into the controller in a predefined constellation that can be detected by the electronic device in order to detect the controller in image data, determine positional information for the controller, or the like.

The flowchart 400 proceeds to block 425, and determination is made as to whether a threshold number of markers are visible. For example, three or more markers may need to be visible in order to determine an orientation of the controller. In other examples, a different number of markers may be required to be visible in the image data in order to be able to determine orientation information for the controller. If the threshold number of markers is not visible, then the flowchart concludes at block 415 and the controller tracking state is determined to not be satisfied.

Returning to block 425, if a determination is made that the threshold number of markers is visible, then the flowchart concludes at block 430, and the controller tracking state is determined to be satisfied. Returning to FIG. 3, the determination that the controller tracking state is satisfied may be used at block 320.

At block 320, determination is made as to whether a controller tracking state is satisfied. The controller tracking state may be satisfied, for example, by comparing the controller tracking state parameters to controller tracking criteria. In some embodiments, the controller tracking state may indicate whether the controller pose should be tracked by a controller tracking procedure for purposes of user input. In some embodiments, the controller tracking state may indicate that hand tracking is not needed, and can be suppressed. For example, UI components may be invoked by either a controller pose or a hand pose, and the controller tracking state may determine which approach is used to invoke those UI components.

If a determination is made at block 320 that the controller tracking state is not satisfied, then the flowchart optionally proceeds to block 325. At block 325, controller input is suppressed. In some embodiments, suppressing controller input may involve suppressing triggers for invocation of UI components arising from the controller pose. Then, at optional block 330, hand pose data may be determined from the sensor data of the user. Hand pose data may include position and/or orientation information for the hand or portions of the hand, such as individual joints on the hand. In some embodiments, the joint information may be used to determine a hand pose, or to determine whether the hand is performing a user input gesture. That is, the UI components may be triggered by hand pose, but not by controller pose in this framework.

The flowchart 300 then proceeds to optional block 335, where the hand tracking data is processed for user input. According to some embodiments, processing hand tracking data may include determining, by a hand tracking procedure, whether the hand position, orientation, or the like matches an input event, such as a user input gesture, such as a pinch, tap scroll, or a gesture associated with invoking UI elements, such as a palm-up position or a palm-flip. In some embodiments, other data may be considered, such as a relative position of the hand to a user's head, hand motion, or the like. According to some embodiments, the head-mounted device or other electronic device may detect that the hand pose satisfies a trigger for a user input action, and may initiate the user input action therefrom, such as a pinch, tap scroll, or a gesture associated with invoking UI elements, such as a palm-up position or a palm-flip. Some of the user input actions, such as the palm-up or palm-flip may be initiated based on detected pose without any additional affirmative selection action such as a pinch, button push, or the like. The flowchart proceeds to block 340, and the device continues to receive sensor data.

Returning to block 320, if the determination is made that controller tracking state is satisfied, then the flowchart proceeds to optional block 345. At optional block 345, hand gesture input is suppressed. For example, if a controller is held by hand, and the controller is sufficiently visible, then the hand may be considered to be in a controller input state, in which hand gesture data may be disregarded.

The flowchart 300 proceeds to block 350, where controller pose is determined based on the controller tracking data and the head data. In some embodiments, the controller pose may be determined to match a user input pose based on the relation of the pose to a user's head. For example, in a palm-up position, a first portion of the controller may be facing towards the head of a user, whereas in a palm-flip position, the same portion of the controller may be facing away from the user's head. In some embodiments, the controller pose may further be determined based on additional information, such as available user interface components, application state on the electronic device, or the like. Other information may include, for example, motion received from the controller, such as an IMU or other motion sensor on the controller which is passed to the electronic device, or the like. For example, in a palm-flip position, a motion of the controller may be used to detect that the controller has moved from one user input state to another.

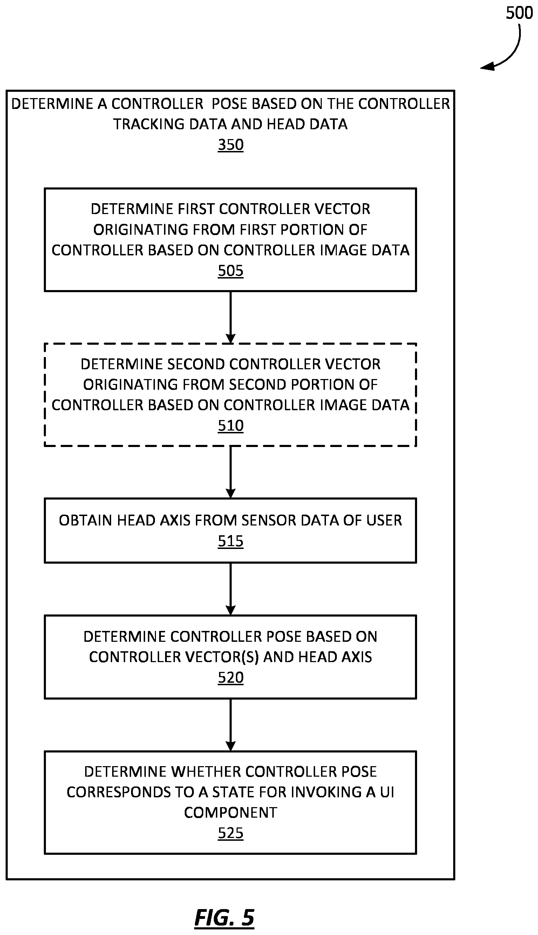

FIG. 5 includes a flowchart of an example technique for determining a controller pose based on controller tracking data and head data. As described above with respect to block 350 of FIG. 3, whether a controller pose is positioned to invoke a user interface component may be based on the controller's position with respect to the user's head. For purposes of explanation, the following steps will be described as being performed by particular components. However, it should be understood that the various actions may be performed by alternate components. The various actions may be performed in a different order. Further, some actions may be performed simultaneously, and some may not be required, or others may be added.

The flowchart begins at block 505, where a first controller vector originating from a first portion of the controller is determined based on the controller image data. An example of the first controller vector is presented at first controller vector 160 of FIGs. 1A and 1B. According to some embodiments, the first portion of the controller may be a side or surface of the controller which faces the user's head when the user's palm faces the user's head. Optionally, at block 510, the technique includes determining a second controller vector originating from a second portion of the controller based on the image data. An example of the second controller vector is shown as second controller vector 170 of FIG. 1A and 1B. In some embodiments, the second portion of the controller may be a second side or surface of the controller that is on the same side as the user's thumb when the user is holding the controller.

According to one or more embodiments, the controller vectors may be determined based on image data of the controller. For example, the electronic device may analyze the image data to detect markers in the form of a predefined constellation known to the electronic device. From here, the electronic device can infer orientation information for the controller. This may include the first controller vector and/or optional second controller vector. In some embodiments, additional information may be used. For example, the controller may be equipped with a motion sensor or location sensor, such as an IMU. The controller's captured data about its own motion may be transmitted to the electronic device. The electronic device may then perform sensor fusion to determine, or improve determination, of the first controller vector and/or optional second controller vector.

The flowchart 500 proceeds to optional block 515, where a head axis is determined from the sensor data. An example of the head axis is shown at head vector 190A of FIG. 1A and head vector 190B of FIG. 1B. In some embodiments, a location of the head may be determined based on sensor data from sensors capturing the various joints. For example, a head pose may be determined based on an offset distance and/or orientation from a headset position, or may use the headset position as the head position and/or orientation, in accordance with one or more embodiments. The head axis may correspond to an upward axis for the headset.

At block 520, the routine determines controller pose parameters by comparing one or both of the first and second controller vectors (determined at blocks 505 and 510) with the head axis (obtained at block 515). In some embodiments, the comparison may include a calculation, such as dot products, cross products, or angular offsets that quantify how the controller is oriented relative to the user's head. For example, the orientation of a controller vector (e.g., the first controller vector 160 of FIG. 1A and FIG. 1B) is compared to one or more of the head vector (e.g., the head vector 190A of FIG. 1A and head vector 190B of FIG. 1B) using dot products. Thus, the controller pose parameters may include calculated values, directional information, or the like from which a corresponding input type can be determined.

In some cases, more than one controller axis is used to disambiguate orientations. As an example, a dot product may be the same in a palm-up pose and a palm-flip pose. By considering the direction of the second vector, a determination may be made as to the direction of the controller. As another example, consideration of a second controller vector may facilitate distinguishing between "palm-up" and "palm-flip" based on natural user motion, such as when the user over-rotates the controller. The system may use the second controller vector compared to the head vector to determine the intent of the user.

The flowchart 500 concludes at block 525, where the system evaluates whether the controller pose parameters determined at block 520 satisfy geometric criteria that define one of several controller pose states (such as a "palm-up" state or a "palm-flip" state). These criteria can include threshold angles between vectors, threshold dot product magnitudes, or combinations of such metrics. Accordingly, the controller pose parameters determined above with respect to block 350 may be compared against predefined parameters for each of one or more controller states that are associated with invoking particular components. As an example, to determine if the controller is in a "palm-up" orientation, the system may calculate the dot product between the controller vector and the head vector. A high value, such as a value within a predefined range or satisfying a predefined threshold, indicates alignment, which can be mapped to a "palm-up" state. As another example, a "palm-flip state" may be determined based on the comparison of the first controller vector and second controller vector and, optionally, motion data indicating that the controller entered the palm-flip state from the palm-up state.

Returning to FIG. 3, the controller state can be used at block 355 to invoke user input components. According to one or more embodiments, the position and orientation of the controller may be sufficient to initiate a user input action. Alternatively, other data may be used to determine intentionality to invoke user input components. For example, a gaze ray of the user may be determined with respect to the controller and/or a user input presentation region.

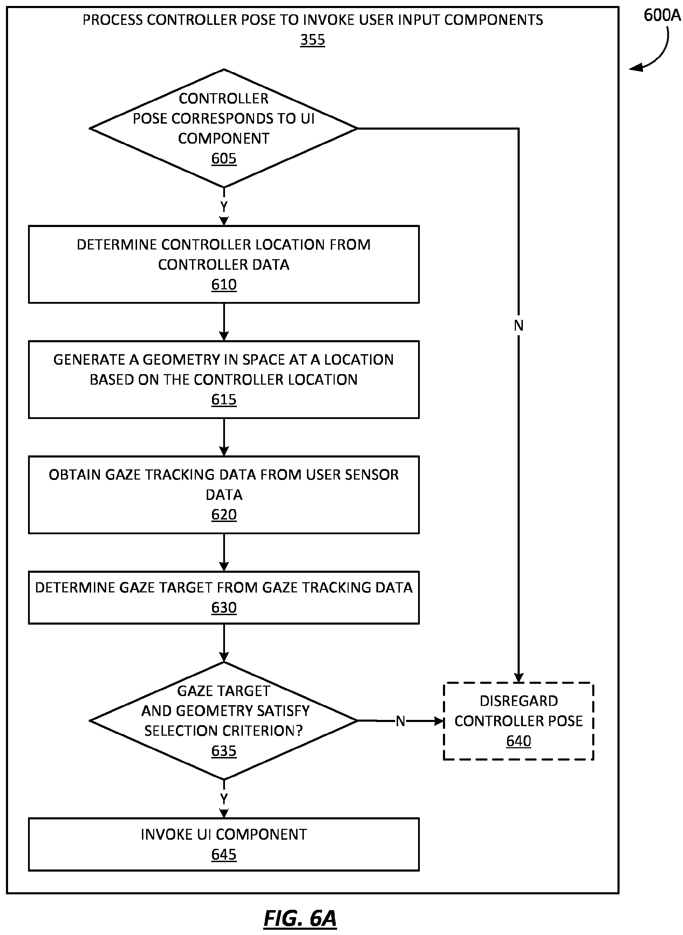

FIGs. 6A-6B depict an example technique for processing controller pose to determine whether to present a UI component, in accordance with one or more embodiments. For purposes of explanation, the following steps will be described as being performed by particular components. However, it should be understood that the various actions may be performed by alternate components. The various actions may be performed in a different order. Further, some actions may be performed simultaneously, and some may not be required, or others may be added.

Turning to FIG. 6A, the flowchart 600A begins at block 605, where it receives an indication that the controller pose corresponds to a predetermined pose associated with invoking a UI component. The determination may be based on the process described above at block 525 of FIG. 5, where the system evaluates whether the controller pose parameters determined at block 520 satisfy geometric criteria that define one of several controller pose states. Examples of controller pose states include the "palm-up" state and the "palm-flip" state. If a determination is made that the controller pose fails to correspond to a UI component invocation, then the flowchart concludes at optional block 640, where the controller pose is disregarded for user input purposes. Block 640 is presented as an optional block because, in some embodiments, disregarding controller pose may be an active process. Alternatively, disregarding controller pose may simply be not invoking any user input component based on controller pose. As another example, disregarding controller pose may be an optional step because controller pose may be used for other types of input, such as activating a user input action based on the controller pose along with a selection action, such as a trigger pull, button press, hand gesture selection/pinch, or the like.

Returning to block 605, if a determination is made that the controller pose corresponds to UI input, then the flowchart proceeds to block 610. At block 610, the routine determines a controller location from controller tracking data. The controller location may indicate a location in space where the controller is located. In some embodiments, the controller location may be determined concurrently with, or prior to, the determination at block 605. The location may be determined in a coordinate system consistent with the electronic device. In some embodiments, the location of the controller may be determined passively, such as based on image data captured by the electronic device of the controller, without the controller providing any information about its location, orientation, or the like. As another example, the controller may provide location and/or motion information which may be used to determine a location of the controller. In other embodiments, the electronic device may perform sensor fusion to combine information about the controller location based on the image data, as well as position and/or motion information received from the controller.

The flowchart 600 proceeds to block 615, where a geometry in space is generated with respect to the controller. In some embodiments, the geometry may be based on a bounding box of the controller. The bounding box may be determined, for example, based on a location of the controller, and/or a geometry of the controller. In some embodiments, the bounding box may indicate a location of the controller and sensor data, or may include a region in space surrounding the controller. Further, in some embodiments, the location may be offset from the controller, or may extend in a direction from the controller where the UI component would be anchored when presented. For example, in a palm-up position, the UI component may be anchored to a location above the controller. In the palm-flip position, the UI component may be anchored to a position offset from a corner of the controller corresponding to the index finger. Accordingly, the bounding box may be used to determine whether the user is gazing at the controller, or a region and space where the UI component may be presented near the controller.

The flowchart 600A proceeds to block 620, where gaze tracking data is obtained from the user sensor data. In some embodiments, the gaze tracking data may be obtained concurrently with, or prior to, the determination at block 605. As described above, the gaze tracking data may be determined from user facing cameras or other sensors on a head-mounted device. By detecting directional information for the eyes, the electronic device may determine which direction the user is looking in the real world environment, for example, through a transparent or semi-transparent display, or in pass-through image data of the real world environment. At block 630, a gaze target is determined. The gaze target may be a point or direction in the environment where the user is looking, and may be determined based on the gaze tracking data.

At block 635, a determination is made as to whether the gaze target and the previously generated geometry satisfy a selection criterion. In one embodiment, the selection criterion is satisfied when the gaze vector intersects the geometry or intersects it within a tolerance margin. If the selection criterion is not satisfied, the flowchart proceeds to block 640, where the system optionally disregards the controller pose for user input, thereby preventing inadvertent activation of the UI component. As described above, disregarding controller pose may be an active process. Alternatively, disregarding controller pose may simply be not invoking any user input component based on controller pose.

If the criterion is satisfied, control moves to block 645, and the electronic device invokes the UI component. The UI component that is invoked may be the UI component determined to correspond to the controller pose at block 605. According to one or more embodiments, invoking the UI component may include causing the component to be presented in the user's field of view. In some embodiments, the invoked component may be presented at a location anchored to the controller, the geometry, or the like.

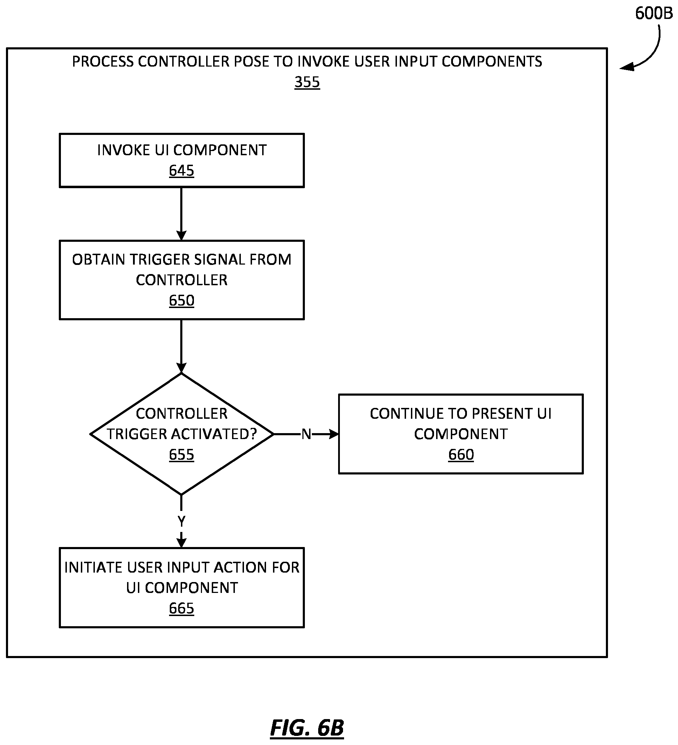

The flowchart may continue at FIG. 6B. As shown, the flowchart in FIG. 6B begins with invoking the UI component at block 645. The flowchart continues to block 650, where the electronic device obtains a trigger signal from the controller. In some embodiments, the trigger signal may be a detected signal from sensor data that a selection criterion is satisfied. For example, a selection gesture, such as a pinch or a tap, may be detected. As another example, a signal may be received from the controller that a selection component has been activated. For example, a trigger pull or button press may be detected at the controller and communicated to the electronic device.

The flowchart proceeds to block 655, where a determination is made as to whether the controller trigger is activated. If the controller trigger is not activated, the UI component may continue to be presented, as shown at block 660. Alternatively, if at block 655 a determination is made that the controller trigger is activated, then the flowchart concludes at block 665, and a user input action for the UI component is initiated. For example, the UI component that is presented can be selected for additional options or input by the user.

Returning to FIG. 3, the flowchart then proceeds to block 340, and the device continues to receive sensor data. For example, the flowchart of FIG. 3 may be performed on a per-frame basis, such that the UI component may be re-invoked, or may continue to be presented. Alternatively, the presentation of the UI component may be cancelled if the controller pose no longer satisfies a controller tracking state, the gaze criterion is no longer satisfied, or the like.

### Example Electronic Device and Related Components

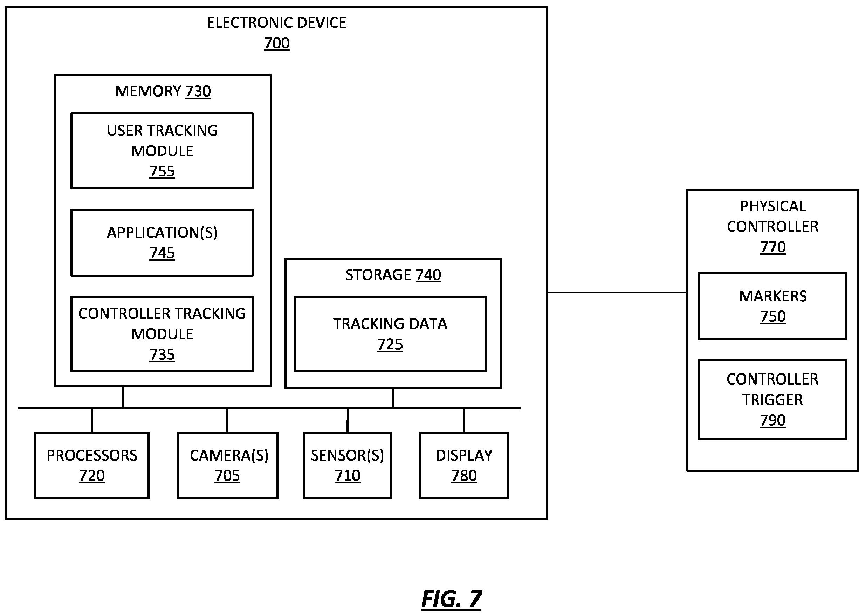

Referring to FIG. 7, a simplified block diagram of an electronic device 700 is depicted. Electronic device 700 may be part of a multifunctional device, such as a head-mounted device, mobile phone, tablet computer, personal digital assistant, portable music/video player, wearable device, head-mounted systems, projection-based systems, base station, laptop computer, desktop computer, network device, or any other electronic systems such as those described herein. For example, electronic device 110 of FIGs. 1A-1B and 2A-2B may be an example of electronic device 700. Electronic device 700 may include one or more additional devices within which the various functionality may be contained or across which the various functionality may be distributed, such as server devices, base stations, accessory devices, etc. Illustrative networks include, but are not limited to, a local network such as a universal serial bus (USB) network, an organization's local area network, and a wide area network such as the Internet. It should be understood that the various components and functionality within electronic device 700 may be differently distributed across the modules or components, or even across additional devices.

Electronic device 700 may include a display 780 which may present a UI for interaction by a user. Display 780 may be an opaque display or may be semitransparent or transparent. Display 780 may incorporate LEDs, OLEDs, a digital light projector, liquid crystal on silicon, or the like. Display 780 may be configured to present pass-through image data of a physical environment, virtual content overlayed on a view of the physical environment, or some combination thereof.

Electronic device 700 may include one or more processors 720, such as a central processing unit (CPU) or graphics processing unit (GPU). Electronic device 700 may also include a memory 730. Memory 730 may include one or more different types of memory, which may be used for performing device functions in conjunction with processor(s) 720. For example, memory 730 may include cache, ROM, RAM, or any kind of transitory or non-transitory computer readable medium capable of storing computer readable code. Memory 730 may store various programming modules for execution by processor(s) 720, including user tracking module 755, controller tracking module 735, and other various applications 745.

Electronic device 700 may also include storage 740. Storage 740 may include one or more non-transitory computer readable media including, for example, magnetic disks (fixed, floppy, and removable) and tape, optical media such as CD-ROMs and digital video disks (DVDs), and semiconductor memory devices such as Electrically Programmable Read-Only Memory (EPROM) and Electrically Erasable Programmable Read-Only Memory (EEPROM). Storage 740 may be utilized to store various data and structures which may be utilized for storing data related to hand tracking and UI preferences. Storage 740 may be configured to store tracking data 725, such as enrollment data or other data used for tracking a user and/or controller, according to one or more embodiments. Electronic device 700 may additionally include a network interface from which the electronic device 700 can communicate across a network.

User tracking module 755 may be used to track locations of hands, arms, joints, and other indicators of user pose and/or motion in a physical environment. User tracking module 755 may use sensor data, such as data from camera(s) 705 and/or sensor(s) 710. In some embodiments, user tracking module 755 may track user movements to determine whether to trigger user input from a detected input gesture. In some embodiments described herein, the user tracking module 755 may be configured to determine controller tracking state, head pose information, gaze information, or the like.

Controller tracking module 735 may analyze image data, for example, captured by camera(s) 705 to determine position and/or orientation information for the physical controller 770. The position and/or orientation information may be determined by detecting one or more markers 750 on the controller 770 in the image data. Markers 750 may be illuminators, reflectors, or other indicators included in the physical controller 770 in a predefined constellation, from which location and/or orientation of the controller can be determined. The position and/or orientation information from the physical controller may be combined with additional data, for example, from a motion sensor of the physical controller 770 or other data in a multimodal tracking process. The position and/or orientation information may then be used for user input, for example, for application(s) 745. Controller 770 may additionally include a controller trigger 790, such as one or more physical triggers, buttons, or the like, which, when activated, can cause a selection signal to be provided to the electronic device 700.

Although electronic device 700 is depicted as comprising the numerous components described above, in one or more embodiments, the various components may be distributed across multiple devices. Accordingly, although certain calls and transmissions are described herein with respect to the particular systems as depicted, in one or more embodiments, the various calls and transmissions may be made differently, or may be differently directed based on the differently distributed functionality. Further, additional components may be used, or some combination of the functionality of any of the components may be combined.

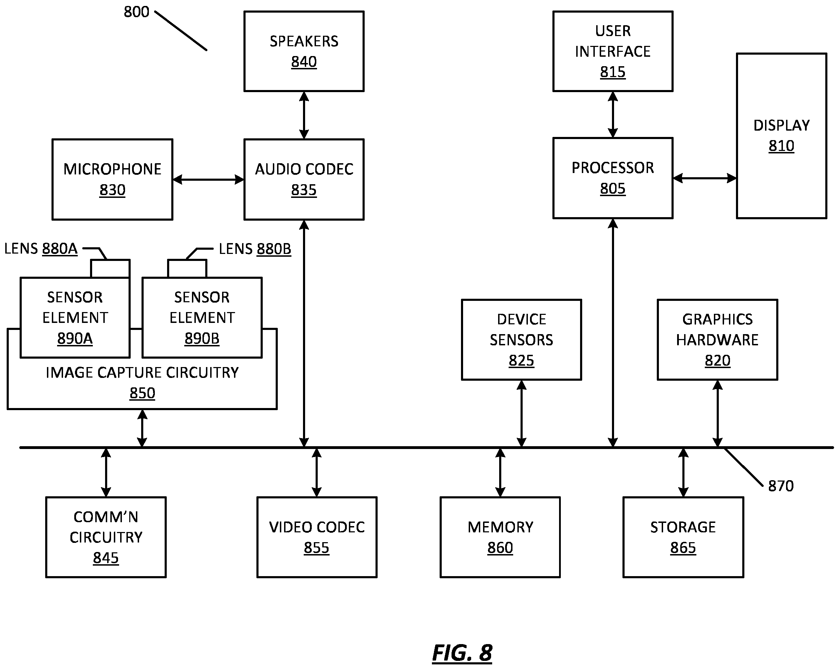

Referring now to FIG. 8, a simplified functional block diagram of illustrative multifunction electronic device 800 is shown according to one embodiment. Each of electronic devices may be a multifunctional electronic device or may have some or all of the described components of a multifunctional electronic device described herein. Multifunction electronic device 800 may include processor 805, display 810, user interface 815, graphics hardware 820, device sensors 825 (e.g., proximity sensor/ambient light sensor, accelerometer and/or gyroscope), microphone 830, audio codec(s) 835, speaker(s) 840, communications circuitry 845, digital image capture circuitry 850 (e.g., including camera system), video codec(s) 855 (e.g., in support of digital image capture unit), memory 860, storage device 865, and communications bus 870. Multifunction electronic device 800 may be, for example, a digital camera or a personal electronic device such as a personal digital assistant (PDA), personal music player, mobile telephone, or a tablet computer.

Processor 805 may execute instructions necessary to carry out or control the operation of many functions performed by device 800 (e.g., such as the generation and/or processing of images as disclosed herein). Processor 805 may, for instance, drive display 810 and receive user input from user interface 815. User interface 815 may allow a user to interact with device 800. For example, user interface 815 can take a variety of forms, such as a button, keypad, dial, click wheel, keyboard, display screen, touch screen, gaze, and/or gestures. Processor 805 may also, for example, be a system-on-chip such as those found in mobile devices and include a dedicated GPU. Processor 805 may be based on reduced instruction-set computer (RISC) or complex instruction-set computer (CISC) architectures or any other suitable architecture and may include one or more processing cores. Graphics hardware 820 may be special purpose computational hardware for processing graphics and/or assisting processor 805 to process graphics information. In one embodiment, graphics hardware 820 may include a programmable GPU.

Image capture circuitry 850 may include two (or more) lens assemblies 880A and 880B, where each lens assembly may have a separate focal length. For example, lens assembly 880A may have a short focal length relative to the focal length of lens assembly 880B. Each lens assembly may have a separate associated sensor element 890. Alternatively, two or more lens assemblies may share a common sensor element. Image capture circuitry 850 may capture still and/or video images. Output from image capture circuitry 850 may be processed by video codec(s) 855 and/or processor 805 and/or graphics hardware 820, and/or a dedicated image processing unit or pipeline incorporated within circuitry 850. Images so captured may be stored in memory 860 and/or storage 865.

Sensor and camera circuitry 850 may capture still and video images that may be processed in accordance with this disclosure, at least in part, by video codec(s) 855 and/or processor 805 and/or graphics hardware 820, and/or a dedicated image processing unit incorporated within circuitry 850. Images captured may be stored in memory 860 and/or storage 865. Memory 860 may include one or more different types of media used by processor 805 and graphics hardware 820 to perform device functions. For example, memory 860 may include memory cache, read-only memory (ROM), and/or random-access memory (RAM). Storage 865 may store media (e.g., audio, image, and video files), computer program instructions or software, preference information, device profile information, and any other suitable data. Storage 865 may include one or more non-transitory computer readable storage mediums including, for example, magnetic disks (fixed, floppy, and removable) and tape, optical media such as CD-ROMs and DVDs, and semiconductor memory devices such as EPROM and EEPROM. Memory 860 and storage 865 may be used to tangibly retain computer program instructions, or code organized into one or more modules and written in any desired computer programming language. When executed by, for example, processor 805, such computer program code may implement one or more of the methods described herein.

Various processes defined herein consider the option of obtaining and utilizing a user's identifying information. For example, such personal information may be utilized in order to track a user's pose and/or motion. However, to the extent such personal information is collected, such information should be obtained with the user's informed consent, and the user should have knowledge of and control over the use of their personal information.

Personal information will be utilized by appropriate parties only for legitimate and reasonable purposes. Those parties utilizing such information will adhere to privacy policies and practices that are at least in accordance with appropriate laws and regulations. In addition, such policies are to be well established and in compliance with or above governmental/industry standards. Moreover, these parties will not distribute, sell, or otherwise share such information outside of any reasonable and legitimate purposes.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health-related applications, data de-identification can be used to protect a user's privacy. De-identification may be facilitated, when appropriate, by removing specific identifiers (e.g., date of birth), controlling the amount or specificity of data stored (e.g., collecting location data at city level rather than at an address level), controlling how data is stored (e.g., aggregating data across users), and/or other methods.

It is to be understood that the above description is intended to be illustrative and not restrictive. The material has been presented to enable any person skilled in the art to make and use the disclosed subject matter as claimed and is provided in the context of particular embodiments, variations of which will be readily apparent to those skilled in the art (e.g., some of the disclosed embodiments may be used in combination with each other). Accordingly, the specific arrangement of steps or actions shown in FIGs. 3-6A and 6B or the arrangement of elements shown in FIGs. 1-2, and 7-8 should not be construed as limiting the scope of the disclosed subject matter. The scope of the invention, therefore, should be determined with reference to the appended claims, along with the full scope of equivalents to which such claims are entitled. In the appended claims, the terms "including" and "in which" are used as the plain-English equivalents of the respective terms "comprising" and "wherein."

Exemplary embodiments of the present disclosure are set out in the following items:
1. A method comprising:
   determining controller orientation data from image data including a controller;
   determining pose of a controller relative to a head of a user;
   determining a gaze vector for the user; and
   invoking presentation of a user interface component based on the gaze vector and the pose of the controller relative to the head of the user.
2. The method of item 1, wherein the user interface component is invoked based on a comparison of a directional vector from the controller and a location of the head of the user.
3. The method of any of items 1-2, further comprising:
   determining, based on the controller orientation data, a geometry in space determined based on a location of the controller; and
   determining that a gaze criterion is satisfied in response to the gaze vector intersecting the geometry,
   wherein the presentation of the user interface component is invoked based on the gaze criterion being satisfied.
4. The method of any of items 1-3, further comprising:
   initiating a controller tracking procedure in response to:
   detecting a threshold number of markers on the controller in the image data, and
   determining, based on the image data, that the controller is held by a user.
5. The method of item 4, wherein the markers on the controller comprise one or more illuminators.
6. The method of any of items 1-5, wherein the presentation of the user interface component is invoked in accordance with a controller tracking procedure, and further comprising:
   ceasing a hand tracking procedure in accordance with initiating the controller tracking procedure.
7. The method of any of items 1-6, further comprising:
   in response to detecting an input event from the controller, performing a selection action in accordance with the user interface component.
8. The method of any of items 1-7, wherein the user interface component is a first user interface component selected from a plurality of user interface components, and wherein the first user interface component is invoked in accordance with the pose of the controller satisfying a first controller input state.
9. The method of item 8, wherein a second user interface component of the plurality of user interface components is invoked in response to the pose of the controller satisfying a second controller input state.
10. The method of item 9, wherein the first controller input state is associated with first geometric characteristics between a first portion of the controller and the head.
11. The method of item 10, wherein the second controller input state is associated with second geometric characteristics between a second portion of the controller and the head.
12. The method of any of items 1-11, further comprising:
   receiving motion data from the controller,
   wherein the first geometric characteristics of the controller are further determined based on the motion data.
13. The method of any of items 1-12, further comprising:
   in response to detecting a user input at the controller, invoking a user input action for the user interface component.
14. A non-transitory computer readable medium comprising computer readable code executable by one or more processors to:
   determine controller orientation data from image data including a controller;
   determine pose of a controller relative to a head of a user;
   determine a gaze vector for the user; and
   invoke presentation of a user interface component based on the gaze vector and the pose of the controller relative to the head of the user.
15. The non-transitory computer readable medium of item 14, wherein the user interface component is invoked based on a comparison of a directional vector from the controller and a location of the head of the user.
16. The non-transitory computer readable medium of any of items 14-15, further comprising computer readable code to:
   determine, based on the controller orientation data, a geometry in space determined based on a location of the controller; and
   determine that a gaze criterion is satisfied in response to the gaze vector intersecting the geometry,
   wherein the presentation of the user interface component is invoked based on the gaze criterion being satisfied.
17. The non-transitory computer readable medium of any of items 14-16, further comprising computer readable code to:
   initiate a controller tracking procedure in response to:
   a detection of a threshold number of markers on the controller in the image data, and
   a determination, based on the image data, that the controller is held by a user.
18. The non-transitory computer readable medium of item 17, wherein the markers on the controller comprise one or more illuminators.
19. The non-transitory computer readable medium of any of items 14-18, wherein the presentation of the user interface component is invoked in accordance with a controller tracking procedure and further comprising computer readable code to:
   cease a hand tracking procedure in accordance with initiating the controller tracking procedure.
20. The non-transitory computer readable medium of any of items 14-19, further comprising computer readable code to:
   in response to detecting an input event from the controller, perform a selection action in accordance with the user interface component.
21. The non-transitory computer readable medium of any of items 14-20, wherein the user interface component is a first user interface component selected from a plurality of user interface components, and wherein the first user interface component is invoked in accordance with the pose of the controller satisfying a first controller input state.
22. The non-transitory computer readable medium of item 21, wherein a second user interface component of the plurality of user interface components is invoked in response to the pose of the controller satisfying a second controller input state.
23. The non-transitory computer readable medium of item 22, wherein the first controller input state is associated with first geometric characteristics between a first portion of the controller and the head.
24. The non-transitory computer readable medium of item 23, wherein the second controller input state is associated with second geometric characteristics between a second portion of the controller and the head.
25. The non-transitory computer readable medium of any of items 14-24, further comprising computer readable code to:
   receive motion data from the controller,
   wherein the first geometric characteristics of the controller are further determined based on the motion data.
26. The non-transitory computer readable medium of any of items 14-25, further comprising computer readable code to:
   in response to detecting a user input at the controller, invoke a user input action for the user interface component.
27. A system comprising:
   one or more processors; and
   one or more computer readable media comprising computer readable code executable by the one or more processors to:
      determine controller orientation data from image data including a controller;
      determine pose of a controller relative to a head of a user;
      determine a gaze vector for the user; and
      invoke presentation of a user interface component based on the gaze vector and the pose of the controller relative to the head of the user.
28. The system of item 27, wherein the user interface component is invoked based on a comparison of a directional vector from the controller and a location of the head of the user.
29. The system of any of items 27-28, further comprising computer readable code to:
   determine, based on the controller orientation data, a geometry in space determined based on a location of the controller; and
   determine that a gaze criterion is satisfied in response to the gaze vector intersecting the geometry,
   wherein presentation of the user interface component is invoked based on the gaze criterion being satisfied.
30. The system of any of items 27-29, further comprising computer readable code to:
   initiate a controller tracking procedure in response to:
   a detection of a threshold number of markers on the controller in the image data, and
   a determination, based on the image data, that the controller is held by a user.
31. The system of item 30, wherein the markers on the controller comprise one or more illuminators.
32. The system of any of items 27-31, wherein the presentation of the user interface component is invoked in accordance with a controller tracking procedure and further comprising computer readable code to:
   cease a hand tracking procedure in accordance with initiating the controller tracking procedure.
33. The system of any of items 27-32, further comprising computer readable code to:
   in response to detecting an input event from the controller, perform a selection action in accordance with the user interface component.
34. The system of any of items 27-33, wherein the user interface component is a first user interface component selected from a plurality of user interface components, and wherein the first user interface component is invoked in accordance with the pose of the controller satisfying a first controller input state.
35. The system of item 34, wherein a second user interface component of the plurality of user interface components is invoked in response to the pose of the controller satisfying a second controller input state.
36. The system of item 35, wherein the first controller input state is associated with first geometric characteristics between a first portion of the controller and the head.
37. The system of item 36, wherein the second controller input state is associated with second geometric characteristics between a second portion of the controller and the head.
38. The system of any of items 27-37, further comprising computer readable code to:
   receive motion data from the controller,
   wherein the first geometric characteristics of the controller are further determined based on the motion data.
39. The system of any of items 27-38, further comprising computer readable code to:
   in response to detecting a user input at the controller, invoke a user input action for the user interface component.

## Claims

1. A method comprising:
determining controller orientation data from image data including a controller;
determining a pose of the controller relative to a head of a user;
determining a gaze vector for the user; and
invoking presentation of a user interface component in response to presentation criteria being satisfied based on the gaze vector and the pose of the controller relative to the head of the user.

2. The method of claim 1, wherein the user interface component is invoked based on a comparison of a directional vector from the controller and a location of the head of the user.

3. The method of any of claims 1-2, further comprising:
determining, based on the controller orientation data, a geometry in space determined based on a location of the controller; and
determining that a gaze criterion is satisfied in response to the gaze vector intersecting the geometry,
wherein the presentation of the user interface component is invoked based on the gaze criterion being satisfied.

4. The method of any of claims 1-3, further comprising:
initiating a controller tracking procedure in response to:
detecting a threshold number of markers on the controller in the image data, and
determining, based on the image data, that the controller is held by a user.

5. The method of claim 4, wherein the markers on the controller comprise one or more illuminators.

6. The method of any of claims 1-5, wherein the presentation of the user interface component is invoked in accordance with a controller tracking procedure, the method further comprising:
ceasing a hand tracking procedure in accordance with initiating the controller tracking procedure.

7. The method of any of claims 1-6, further comprising:
in response to detecting an input event from the controller, performing a selection action in accordance with the user interface component.

8. The method of any of claim 1-7, wherein the user interface component is a first user interface component selected from a plurality of user interface components, and wherein the first user interface component is invoked in accordance with the pose of the controller satisfying a first controller input state.

9. The method of claim 8, wherein a second user interface component of the plurality of user interface components is invoked in response to the pose of the controller satisfying a second controller input state.

10. The method of any of claims 1-9, wherein the first controller input state is associated with first geometric characteristics between a first portion of the controller and the head.

11. The method of any of claims 9-10, wherein the second controller input state is associated with second geometric characteristics between a second portion of the controller and the head.

12. The method of any of claims 1-11, further comprising:
receiving motion data from the controller,
wherein the first geometric characteristics of the controller are further determined based on the motion data.

13. The method of any of claims 1-12, further comprising:
in response to detecting a user input at the controller, invoking a user input action for the user interface component.

14. A non-transitory computer readable medium comprising computer readable code to perform the method of any of claims 1-13.

15. A system comprising:
one or more processors; and
one or more computer readable media comprising computer readable code executable by the one or more processors to:
determine controller orientation data from image data including a controller;
determine a pose of the controller relative to a head of a user;
determine a gaze vector for the user; and
invoke presentation of a user interface component in response to presentation criteria being satisfied based on the gaze vector and the pose of the controller relative to the head of the user.
